# EUROPÄISCHE PATENTSCHRIFT

(11) **EP 3 617 569 B1**
(45) Veröffentlichungstag und Bekanntmachung des Hinweises auf die Patenterteilung: **17.02.2021**
(21) Anmeldenummer: 18191062.1
(22) Anmeldetag: 28.08.2018
(51) Int. Cl.: F16K 15/14, F16L 21/00, E03B 7/04, E03B 7/09, F16L 41/02

(54) **ANSCHLUSSARMATUR SOWIE WASSERLEITUNGSSYSTEM**
CONNECTING FITTING AND WATER ROUTING SYSTEM
ARMATURE DE RACCORDEMENT AINSI QUE SYSTÈME DE CONDUITES D'EAU

(43) Veröffentlichungstag der Anmeldung: 04.03.2020
(73) Patentinhaber: Georg Fischer JRG AG, 4450 Sissach (CH)
(72) Erfinder: BÜRLI, Stephan, 4402 Frenkendorf (CH); BENZINGER, Oliver, 78343 Hemmenhofen (DE)
(74) Vertreter: Fenner, Seraina

(56) Entgegenhaltungen:
- EP-A1- 2 843 141
- EP-A2- 2 592 191

## Beschreibung

Die Erfindung betrifft eine Anschlussarmatur zum strömungstechnischen Anschließen einer Ringleitung an eine Hauptleitung, mit einem ersten Hauptleitungsanschluss und einem zweiten Hauptleitungsanschluss zum Anschließen der Hauptleitung sowie einem ersten Ringleitungsanschluss und einem zweiten Ringleitungsanschluss zum Anschließen der Ringleitung, wobei der erste Hauptleitungsanschluss und der erste Ringleitungsanschluss unmittelbar an eine Verbindungsleitung strömungstechnisch angeschlossen sind, die über ein Querschnittsverstellelement in eine Verbindungskammer einmündet, an die der zweite Hauptleitungsanschluss auf der dem ersten Hauptleitungsanschluss strömungstechnisch abgewandten Seite angeschlossen ist.

Aus dem Stand der Technik ist beispielsweise die Druckschrift EP 2 592 191 A2 bekannt. Diese beschreibt ein rohrförmiges Verbindungselement mit einer ersten Öffnung, einer zweiten Öffnung, einem ersten Verbindungsabschnitt, einem zweiten Verbindungabschnitt, einem Düsenabschnitt und einem Kontrollbereich, wobei der erste Verbindungsabschnitt mit einem ersten Anschlussstück verbindbar ist, wobei der zweite Verbindungsabschnitt mit einem zweiten Anschlussstück verbindbar ist, wobei der Düsenabschnitt in das zweite Anschlussstück einführbar ist, und wobei nach der Verbindung mit dem ersten Anschlussstück und dem zweiten Anschlussstück der Kontrollbereich von außen sichtbar ist.

Weiterhin beschreibt die Druckschrift EP 2 843 141 A1 eine Treibstrahldüse zum Einbauen in Brauch- oder Trinkwasserleitungssysteme eines Gebäudes wie auch in Reinstwasserleitungssysteme, vorzugweise in der Hauptleitung, wobei mindestens eine Ringleitung an der Hauptleitung angeordnet ist und wobei die Treibstrahldüse zwischen den Abzweigarmaturen der Ringleitung angeordnet ist, wobei die Treibstrahldüse eine Einlassöffnung und eine Auslassöffnung aufweist. Dabei ist vorgesehen, dass die Querschnittsfläche der Einlassöffnung konstant ist und die Querschnittsfläche der Auslassöffnung veränderbar ist.

Schließlich beschreibt die Druckschrift EP 2 167 740 B1 eine Anschlussarmatur zum Anschließen einer Ringleitung mit mindestens einem Verbraucher an einen Stockwerks- beziehungsweise Steigrohrstrang mit an den Strang anschließbaren Ein- und Auslassöffnungen, einer dazwischenliegenden Einfädelöffnung für die Ringleitung, der in Strömungsrichtung eine Querschnittsverengung vorgelagert ist, welche durch den Venturi-Effekt in einem Bereich der Einfädelöffnung einen niedrigeren Druck erzeugt. Dabei sind Mittel zum Variieren der Durchtrittsfläche der Querschnittsverengung vorgesehen.

Es ist Aufgabe der Erfindung, eine Anschlussarmatur zum strömungstechnischen Anschließen einer Ringleitung an eine Hauptleitung vorzuschlagen, welche gegenüber bekannten Anschlussarmaturen Vorteile aufweist, insbesondere eine besonders hohe Effizienz bei der Erzeugung einer Spülströmung in der Ringleitung bei einer Durchströmung der Hauptleitung aufweist, also beispielsweise während eines bestimmungsgemäßen Betriebs ein großes Verhältnis zwischen einer Druckdifferenz zwischen dem ersten Ringleitungsanschluss und dem zweiten Ringleitungsanschluss oder einem Massenstrom durch die Ringleitung einerseits und einem Druckverlust über die Anschlussarmatur hinweg andererseits.

Dies wird erfindungsgemäß mit einer Anschlussarmatur mit den Merkmalen des Anspruchs 1 erreicht. Dabei ist vorgesehen, dass der zweite Ringleitungsanschluss über einen von der Verbindungsleitung begrenzten Ringraum strömungstechnisch an die Verbindungskammer angeschlossen ist, sodass im Schnitt gesehen die Verbindungsleitung eine Mündungsöffnung des zweiten Ringleitungsanschlusses in den Ringraum vollständig übergreift und das Querschnittsverstellelement vollständig auf einer dem ersten Ringleitungsanschluss abgewandten Seite der Mündungsöffnung angeordnet ist.

Die Anschlussarmatur ist beispielsweise Bestandteil eines Wasserleitungssystems, welches über die Hauptleitung und die wenigstens eine Ringleitung verfügt. Die Ringleitung ist im Rahmen des Wasserleitungssystems über die Anschlussarmatur strömungstechnisch an die Hauptleitung angeschlossen. Hierzu ist die Hauptleitung einerseits an den ersten Hauptleitungsanschluss und andererseits an den zweiten Hauptleitungsanschluss der Anschlussarmatur angeschlossen, wohingegen die Ringleitung einerseits an den ersten Ringleitungsanschluss und andererseits an den zweiten Ringleitungsanschluss der Anschlussarmatur strömungstechnisch angeschlossen ist. Das Wasserleitungssystem kann über eine beliebige Anzahl an Ringleitungen verfügen, welche strömungstechnisch nacheinander jeweils über eine Anschlussarmatur der beschriebenen Art an die Hauptleitung angeschlossen sind. Schlussendlich liegen also ebenso viele Anschlussarmaturen wie Ringleitungen vor.

In der Ringleitung ist vorzugsweise wenigstens ein Wasserverbraucher angeordnet, sodass der wenigstens eine Wasserverbraucher über die Ringleitung und die Anschlussarmatur an die Hauptleitung strömungstechnisch angeschlossen ist. Vorzugsweise ist in mehreren der Ringleitungen jeweils wenigstens ein solcher Wasserverbraucher strömungstechnisch angeordnet, insbesondere in allen Ringleitungen. Unter dem Wasserverbraucher ist beispielsweise eine Wasserabgabestelle zu verstehen, vorzugsweise eine sanitäre Wasserabgabestelle. Eine solche kann beispielsweise ein Wasserhahn, eine Toilettenspülung oder eine Duscharmatur sein.

Das Wasserleitungssystem kann beispielsweise als Brauchwasserleitungssystem oder als Trinkwasserleitungssystem ausgestaltet sein. Das Trinkwasserleitungssystem kann wiederum als Kaltwasserleitungssystem oder als Warmwasserleitungssystem vorliegen. Im Bereich von Brauch- und Trinkwasser wird aus hygienischen Gründen ein häufiger Wasseraustausch angestrebt, insbesondere in der wenigstens einen Ringleitung beziehungsweise in solchen der Ringleitungen, welche selten genutzt beziehungsweise durchströmt werden. Ein solcher Wasseraustausch kann aktiv, insbesondere mittels einer Pumpe, oder passiv, mittels der beschriebenen Anschlussarmatur, erfolgen.

In der Anschlussarmatur ist das Querschnittsverstellelement angeordnet, mittels welchem eine Querschnittsverengung in der Hauptleitung bewirkt werden kann. Bei Vorliegen der Querschnittsverengung wird in der Ringleitung eine Spielströmung erzeugt, durch welche schlussendlich der Wasseraustausch in der Ringleitung erzwungen wird. Die Anschlussarmatur ist insoweit derart ausgestaltet, dass bei einer Durchströmung der Hauptleitung und einer dadurch bewirkten Durchströmung der Anschlussarmatur die Spülströmung in der Ringleitung erzeugt wird. Insbesondere ist die Anschlussarmatur derart ausgestaltet, dass bei einer Durchströmung der Anschlussarmatur von dem ersten Hauptleitungsanschluss hin zu dem zweiten Hauptleitungsanschluss eine Spülströmung in der Ringleitung ausgehend von dem ersten Ringleitungsanschluss hin zu dem zweiten Ringleitungsanschluss erzeugt wird.

Hierzu ist das Querschnittsverstellelement, mittels welchem die Querschnittsverengung bewirkt werden kann, in der Anschlussarmatur strömungstechnisch zwischen dem ersten Hauptleitungsanschluss und dem zweiten Hauptleitungsanschluss angeordnet. Der erste Ringleitungsanschluss zweigt strömungstechnisch gesehen einerseits des Querschnittsverstellelements und der zweite Ringleitungsanschluss andererseits des Querschnittsverstellelements von einer den ersten Hauptleitungsanschluss und den zweiten Hauptleitungsanschluss verbindenden Strömungsverbindung ab. Mittels des Querschnittsverstellelements kann ein Durchströmungsquerschnitt beziehungsweise eine Durchströmungsquerschnittsfläche eingestellt werden. Je größer die mittels des Querschnittsverstellelements eingestellte Querschnittsverengung ist, also je kleiner eine mittels des Querschnittsverstellelements eingestellte Durchströmungsquerschnittsfläche ist, umso stärker ist - bei gegebener Durchströmung der Hauptleitung - die in der Ringleitung bewirkte Spülströmung. Durch eine derartige Ausgestaltung der Anschlussarmatur kann auch in Ringleitungen, die kaum beziehungsweise selten durchströmt werden, ein hinreichender Wasseraustausch stattfinden, wodurch eine gute Wasserqualität erhalten bleibt.

Die Anschlussarmatur verfügt über die Verbindungsleitung und die Verbindungskammer. Der erste Hauptleitungsanschluss und der erste Ringleitungsanschluss sind unmittelbar an die Verbindungsleitung strömungstechnisch angeschlossen, wohingegen der zweite Hauptleitungsanschluss an die Verbindungskammer angeschlossen ist. In anderen Worten sind der erste Hauptleitungsanschluss und der zweite Hauptleitungsanschluss strömungstechnisch über die Verbindungsleitung und die Verbindungskammer strömungstechnisch aneinander angeschlossen. Strömungstechnisch zwischen der Verbindungsleitung und der Verbindungskammer liegt das Querschnittsverstellelement vor, sodass die Verbindungsleitung ausschließlich über das Querschnittsverstellelement strömungstechnisch an die Verbindungskammer angeschlossen ist beziehungsweise umgekehrt.

Zusätzlich zu dem zweiten Hauptleitungsanschluss ist der zweite Ringleitungsanschluss an die Verbindungskammer strömungstechnisch angeschlossen. Dies bedeutet in anderen Worten, dass strömungstechnisch einerseits des Querschnittsverstellelements der erste Hauptleitungsanschluss und der erste Ringleitungsanschluss an die Verbindungsleitung angeschlossen sind, wohingegen strömungstechnisch andererseits des Querschnittsverstellelements der zweite Hauptleitungsanschluss und der zweite Ringleitungsanschluss an die Verbindungskammer angeschlossen sind. Es ist also vorgesehen, dass innerhalb der Anschlussarmatur der erste Hauptleitungsanschluss und der erste Ringleitungsanschluss ausschließlich über das Querschnittsverstellelement strömungstechnisch an den zweiten Hauptleitungsanschluss und den zweiten Ringleitungsanschluss angeschlossen sind. Bei einer Durchströmung der Anschlussarmatur von dem ersten Hauptleitunganschluss in Richtung des zweiten Hauptleitungsanschlusses tritt über das Querschnittsverstellelement zumindest zeitweise ein Druckverlust auf, durch welchen eine Druckdifferenz zwischen einem in dem ersten Ringleitungsanschluss vorliegenden Druck und einem in dem zweiten Ringleitungsanschluss vorliegenden Druck bewirkt wird. Diese Druckdifferenz führt zu der Spülströmung beziehungsweise der Durchspülung der Ringleitung.

Um eine besonders effiziente Durchspülung der Ringleitung zu bewirken, also einen hohen Massendurchsatz durch die Ringleitung bezogen auf den Druckverlust in der Hauptleitung, ist der zweite Ringleitungsanschluss erst stromabwärts der Verbindungsleitung strömungstechnisch an die Verbindungskammer angeschlossen. Hierdurch wird überraschenderweise eine zumindest teilweise Entkopplung des zweiten Ringleitungsanschlusses von der in der Verbindungskammer auftretenden Strömung bewirkt, sodass die in der Verbindungskammer vorliegenden Strömungsverhältnisse keinen oder allenfalls einen geringen Einfluss auf die Ringleitung beziehungsweise deren Durchspülung haben. Das bedeutet, dass die Spülströmung zumindest teilweise von der Verbindungskammer strömungstechnisch entkoppelt ist, nämlich durch die Anbindung des zweiten Ringleitungsanschlusses an die Verbindungskammer stromabwärts der Verbindungsleitung, insbesondere über den Ringraum, bevorzugt ausschließlich über den Ringraum. Unter dem Ringraum ist ein die Verbindungsleitung ringförmig umgreifender Raum zu verstehen, welcher besonders bevorzugt in Umfangsrichtung durchgehend ausgestaltet, also nicht unterbrochen ist. Der Ringraum weist insoweit die Form eines Zylinderrings auf, insbesondere eines Kreiszylinderrings.

Im Schnitt gesehen, insbesondere im Längsschnitt bezüglich einer Hauptströmungsrichtung von dem ersten Hauptleitungsanschluss hin zu dem zweiten Hauptleitungsanschluss, soll die Verbindungsleitung die Mündungsöffnung, durch welche der zweite Ringleitungsanschluss in den Ringraum einmündet, vollständig übergreifen und das Querschnitt zur Stellelement vollständig auf der dem ersten Ringleitungsanschluss abgewandten Seite der Mündungsöffnung angeordnet sein. Eine solche Ausgestaltung führt schlussendlich dazu, dass die Verbindungsleitung sich von der dem ersten Ringleitungsanschluss zugewandten Seite der Mündungsöffnung bis hin zu der dem ersten Ringleitungsanschluss abgewandten Seite der Mündungsöffnung erstreckt. Die Verbindungsleitung beginnt also im Schnitt gesehen einerseits der Mündungsöffnung und endet andererseits der Mündungsöffnung, sodass sie die Mündungsöffnung im Schnitt gesehen vollständig übergreift.

Weil die Verbindungsleitung über das Querschnittsverstellelement strömungstechnisch an die Verbindungskammer angeschlossen ist, führt eine solche Ausgestaltung der Verbindungsleitung zu der beschriebenen Anordnung des Querschnittsverstellelements vollständig auf der dem ersten Hauptleitungsanschluss abgewandten Seite der Mündungsöffnung. Besonders bevorzugt ist gesehen also vorgesehen, dass - im Schnitt beziehungsweise Längsschnitt gesehen - die Verbindungsleitung die Mündungsöffnung des zweiten Ringleitungsanschlusses in den Ringraum vollständig übergreift und zusätzlich das Querschnittsverstellelement vollständig auf der dem ersten Ringleitungsanschluss abgewandten Seite der Mündungsöffnung angeordnet ist.

Eine Weiterbildung der Erfindung sieht vor, dass der Ringraum einerseits von der Verbindungsleitung und andererseits von einem Armaturengehäuse begrenzt ist, an dem der zweite Ringleitungsanschluss ausgebildet ist und das die Verbindungskammer einfasst. An dem Armaturengehäuse ist zumindest der zweite Ringleitungsanschluss ausgebildet. Zusätzlich kann an dem Armaturengehäuse wenigstens einer der nachfolgend genannten Anschlüsse zusätzlich ausgebildet sein: erster Ringleitungsanschluss, erster Hauptleitungsanschluss und zweiter Hauptleitungsanschluss. Besonders bevorzugt sind mehrere, insbesondere alle, der genannten Anschlüsse an dem Armaturengehäuse ausgebildet. Das Armaturengehäuse fasst die Verbindungskammer ein und begrenzt diese vorzugsweise in radialer Richtung nach außen. Zusätzlich zu der Verbindungskammer begrenzt das Armaturengehäuse auch den Ringraum, nämlich ebenfalls in radialer Richtung nach außen. In radialer Richtung nach innen ist der Ringraum hingegen von der Verbindungsleitung begrenzt. Dies ermöglicht eine besonders kompakte und kostengünstige Ausgestaltung der Anschlussarmatur.

Eine weitere bevorzugte Ausführungsform der Erfindung sieht vor, dass die Verbindungskammer durch eine konische Ausgestaltung eine in Richtung des zweiten Hauptleitungsanschlusses abnehmende Durchströmungsquerschnittsfläche aufweist. Vorzugsweise nimmt die Durchströmungsquerschnittsfläche stetig und/oder gleichmäßig ab. Die konische Ausgestaltung der Verbindungskammer liegt besonders bevorzugt im Schnitt gesehen in Überdeckung mit dem Querschnittsverstellelement vor. Beispielsweise weist die konische Ausgestaltung im Längsschnitt gesehen Abmessungen in axialer Richtung auf, die mindestens 25 %, mindestens 50 % oder mindestens 75 % der Abmessungen des Querschnittsverstellelements in derselben Richtung betragen. Die beschriebene Ausgestaltung der Verbindungskammer ermöglicht eine besonders turbulenzarme Strömungsführung.

Eine weitere Ausgestaltung der Erfindung sieht vor, dass der zweite Ringleitungsanschluss über die Mündungsöffnung in den Ringraum einmündet, wobei der Ringraum zwischen der Mündungsöffnung des Verbindungskammer im Schnitt gesehen zumindest bereichsweise eine konstanten Durchströmungsquerschnittsfläche aufweist. Besonders bevorzugt liegt die konstante Durchströmungsquerschnittsfläche im Schnitt gesehen zwischen der Mündungsöffnung und der Verbindungskammer durchgehend vor. Hierdurch wird eine besonders gleichmäßige Einströmung aus dem zweiten Ringleitungsanschluss in den Ringraum und weiter in die Verbindungskammer gewährleistet.

Im Rahmen einer weiteren Ausgestaltung der Erfindung kann vorgesehen sein, dass die konstante Durchströmungsquerschnittsfläche des Ringraums im Schnitt gesehen bis zu einem Leitungsende der Verbindungsleitung vorliegt. Unter dem Leitungsende ist das dem zweiten Hauptleitungsanschluss zugewandte Ende der Verbindungsleitung, insbesondere die dem zweiten Hauptleitungsanschluss zugewandte Stirnseite der Verbindungsleitung zu verstehen. Die beschriebene Ausgestaltung ermöglicht eine besonders gleichmäßige Einströmung aus dem Ringraum in die Verbindungskammer.

Eine bevorzugte weitere Ausgestaltung der Erfindung sieht vor, dass der Ringraum einen der Verbindungskammer im Schnitt gesehen abgewandten Ringfortsatz aufweist. Der Ringraum erstreckt sich also in die von der Verbindungskammer abgewandte Richtung über den zweiten Ringleitungsanschluss beziehungsweise seine Mündungsöffnung hinaus, um den Ringfortsatz zu bilden. Der Ringfortsatz verhindert eine abrupte Umlenkung des aus Richtung des zweiten Ringleitungsanschlusses in den Ringraum eintretenden Wassers, sodass übermäßige Strömungsverluste vermieden werden.

Eine bevorzugte Weiterbildung der Erfindung sieht vor, dass das Querschnittsverstellelement aus Richtung der Verbindungsleitung in die Verbindungskammer hineinragt. Das Querschnittsverstellelement ist beispielsweise einerseits an der Verbindungsleitung angeordnet und/oder an ihr befestigt. Aus Richtung oder ausgehend von der Verbindungsleitung erstreckt sich das Querschnittsverstellelement in die Verbindungskammer hinein, also in Richtung des zweiten Hauptleitungsanschlusses. Besonders bevorzugt durchgreift das Querschnittsverstellelement im Schnitt gesehen den vorstehend bereits erwähnten konischen Bereich der Verbindungskammer vollständig und ragt in einen sich an den konischen Bereich anschließenden zylindrischen, insbesondere kreiszylindrischen, Bereich hinein oder zumindest bis zu diesem hin. Mit einer derartigen Ausgestaltung des Querschnittsverstellelements wird auf besonders effektive Art und Weise eine Durchströmung der Ringleitung mit der Spülströmung bewirkt.

Eine Weiterbildung der Erfindung sieht vor, dass das Querschnittsverstellelement über ein Strömungswiderstandselement an die Verbindungsleitung strömungstechnisch angeschlossen ist. Während das Querschnittsverstellelement eine variable Durchströmungsquerschnittsfläche aufweist, ist eine Durchströmungsquerschnittfläche des Strömungswiderstandselements konstant. Vorzugsweise ist die Durchströmungsquerschnittsfläche des Strömungswiderstandselements kleiner als die der Verbindungsleitung. Das Strömungswiderstandselement ist strömungstechnisch zwischen der Verbindungsleitung und dem Querschnittsverstellelement angeordnet. Das Strömungswiderstandselement stellt unabhängig von der mittels des Querschnittsverstellelements eingestellten Durchströmungsquerschnittsfläche sicher, dass stets eine Durchströmung der Ringleitung erfolgt.

Eine weitere bevorzugte Ausführung von Erfindung sieht vor, dass das Strömungswiderstandselement ein an dem Leitungsende der Verbindungsleitung befestigtes Halteelement und ein Drosselelement mit konstanter Durchströmungsquerschnittsfläche aufweist, wobei das Drosselelement über das Halteelement an der Verbindungsleitung befestigt ist. Das Halteelement ist beispielsweise zur formschlüssigen Befestigung an dem Leitungsende ausgebildet. Hierzu ist an dem Halteelement eine Formschlusseinrichtung ausgestaltet, welche zum Halten des Strömungswiderstandselements an der Verbindungsleitung mit einem Formschlussgegenelement der Verbindungsleitung formschlüssig zusammenwirkt.

Das Drosselelement, welches die konstante Durchströmungsquerschnittsfläche aufweist, ist über das Halteelement an der Verbindungsleitung beziehungsweise dem Leitungsende der Verbindungsleitung befestigt. Besonders bevorzugt ist es vorgesehen, dass das Querschnittsverstellelement über das Strömungswiderstandselement an der Verbindungsleitung befestigt ist. Hierbei kann es vorgesehen sein, dass das Strömungswiderstandselement und das Querschnittverstellelement als ein gemeinsames Einsetzteil ausgebildet sind, welches bei einer Montage der Anschlussarmatur in das Armaturengehäuse eingesetzt und an der Verbindungsleitung befestigt wird.

Eine weitere vorteilhafte Ausgestaltung der Erfindung sieht vor, dass das Querschnittsverstellelement mehrere Zungen aufweist, die in Umfangsrichtung um eine Längsmittelachse des Querschnittsverstellelements verteilt angeordnet sind und in radialer Richtung zum Einstellen der Durchströmungsquerschnittsfläche des Querschnittsverstellelements elastisch verlagerbar sind. In anderen Worten weist das Querschnittsverstellelement einen Mantel auf, der durch Ausbildung mehrere Schlitze in die Zungen aufgeteilt ist. Die Zungen definieren die Durchströmungsquerschnittsfläche des Querschnittsverstellelements, insbesondere eine kleinste Durchströmungsquerschnittsfläche über die gesamte Erstreckung des Querschnittsverstellelements. Die Zungen sind derart ausgestaltet, dass sie in Abhängigkeit von einer Durchströmung der Anschlussarmatur in Richtung einer größeren Durchströmungsquerschnittsfläche ausgelenkt werden. In anderen Worten stellen die Zungen eine umso größere Durchströmungsquerschnittsfläche des Querschnittverstellelements ein, je stärker eine Durchströmung der Anschlussarmatur beziehungsweise der Hauptleitung ist beziehungsweise umso größer ein Massenstrom durch die Anschlussarmatur von dem ersten Hauptleitungsanschluss in Richtung des zweiten Hauptleitungsanschlusses ist.

Zum Einstellen der Durchströmungsquerschnittsfläche sind die Zungen elastisch verlagerbar, sodass bei Auslenkung der Zungen eine Rückstellkraft bewirkt wird, welche die Zungen in Richtung einer kleineren Durchströmungsquerschnittsfläche drängt. Das derart ausgestaltete Querschnittsverstellelement arbeitet als reiner Strömungswiderstand und ist somit besonders effizient. Es kann vorgesehen sein, dass jeweils zwei der Zungen in zumindest einer Stellung in Umfangsrichtung aneinander anliegen. Dies ist insbesondere bei einer einer kleinsten Durchströmungsquerschnittsfläche des Querschnittsverstellelements entsprechenden Stellung der Fall.

Eine weitere Ausgestaltung der Erfindung sieht vor, dass der Ringraum in einem Querschnitt eine Durchströmungsquerschnittsfläche aufweist, die mindestens so groß ist wie die Durchströmungsquerschnittsfläche der Verbindungsleitung in demselben Querschnitt. Entsprechend kann ein besonders hoher Durchsatz durch den Ringraum erzielt werden. Besonders bevorzugt ist die Durchströmungsquerschnittsfläche des Ringraums mindestens so groß wie die Durchströmungsquerschnittsfläche des zweiten Ringleitungsanschlusses, sodass keine Einschnürung der von dem zweiten Ringleitungsanschluss in Richtung der Verbindungskammer verlaufenden Strömung erfolgt.

Schließlich kann im Rahmen einer weiteren bevorzugten Ausgestaltung der Erfindung vorgesehen sein, dass die Verbindungsleitung an einer Einmündungsstelle des ersten Ringleitungsanschlusses eine Durchströmungsquerschnittsfläche aufweist, die kleiner ist als die Durchströmungsquerschnittsfläche der Verbindungsleitung in dem Querschnitt, oder dass die Verbindungsleitung eine durchgehend konstante Durchströmungsquerschnittsfläche aufweist. Es kann also vorgesehen sein, dass sich die Durchströmungsquerschnittsfläche der Verbindungsleitung ausgehend von der Einmündungsstelle aufweitet, beispielsweise bis hin zu der in dem bestimmten Querschnitt vorliegenden Durchströmungsquerschnittsfläche der Verbindungsleitung. Es kann jedoch auch vorgesehen sein, dass die Durchströmungsquerschnittsfläche zumindest zwischen der Einmündungsstelle des ersten Ringleitungsanschlusses und dem vorstehend bezeichneten Querschnitt konstant bleibt. Besonders bevorzugt weist die Verbindungsleitung jedoch eine durchgehend konstante Durchströmungsquerschnittsfläche auf, sodass eine negative Beeinflussung der Strömung effektiv verhindert wird.

Die Erfindung betrifft weiterhin ein Wasserleitungssystem für ein Gebäude, mit einer Hauptleitung, einer Ringleitung sowie einer Anschlussarmatur, insbesondere einer Anschlussarmatur gemäß den Ausführungen im Rahmen dieser Beschreibung, wobei die Ringleitung über die Anschlussarmatur strömungstechnisch an die Hauptleitung angeschlossen ist und die Anschlussarmatur über einen ersten Hauptleitungsanschluss und einen zweiten Hauptleitungsanschluss, die an die Hauptleitung angeschlossen sind, sowie einen ersten Ringleitungsanschluss und einen zweiten Ringleitungsanschluss, die an die Ringleitung angeschlossen sind, verfügt, wobei der erste Hauptleitungsanschluss und der erste Ringleitungsanschluss unmittelbar an eine Verbindungsleitung strömungstechnisch angeschlossen sind, die über ein Querschnittsverstellelement in eine Verbindungkammer einmündet, an die der zweite Hauptleitungsanschluss auf der dem ersten Hauptleitungsanschluss strömungstechnisch abgewandten Seite angeschlossen ist. Dabei ist vorgesehen, dass der zweite Ringleitungsanschluss über einen von der Verbindungsleitung begrenzten Ringraum strömungstechnisch an die Verbindungskammer angeschlossen ist, sodass im Schnitt gesehen die Verbindungsleitung eine Mündungsöffnung des zweiten Ringleitungsanschlusses in den Ringraum vollständig übergreift und das Querschnittverstellelement vollständig auf einer dem ersten Ringleitungsanschluss abgewandten Seite der Mündungsöffnung angeordnet ist.

Auf die Vorteile einer derartigen Ausgestaltung der Anschlussarmatur beziehungsweise des Wasserleitungssystems wurde bereits hingewiesen. Sowohl das Wasserleitungssystem als auch die Anschlussarmatur können gemäß den Ausführungen im Rahmen dieser Beschreibung weitergebildet sein, sodass auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung durch eine Anschlussarmatur für ein Wasserleitungssystem, wobei mittels eines Querschnittsverstellelements eine erste Durchströmungsquerschnittsfläche eingestellt ist,
- Figur 2: eine schematische Querschnittsdarstellung der Anschlussarmatur in einem ersten Bereich,
- Figur 3: eine schematische Querschnittsdarstellung der Anschlussarmatur anderen Bereich, sowie
- Figur 4: eine weitere schematische Längsschnittdarstellung der Anschlussarmatur, wobei mittels des Querschnittsverstellelements eine zweite Durchströmungsquerschnittsfläche eingestellt ist.

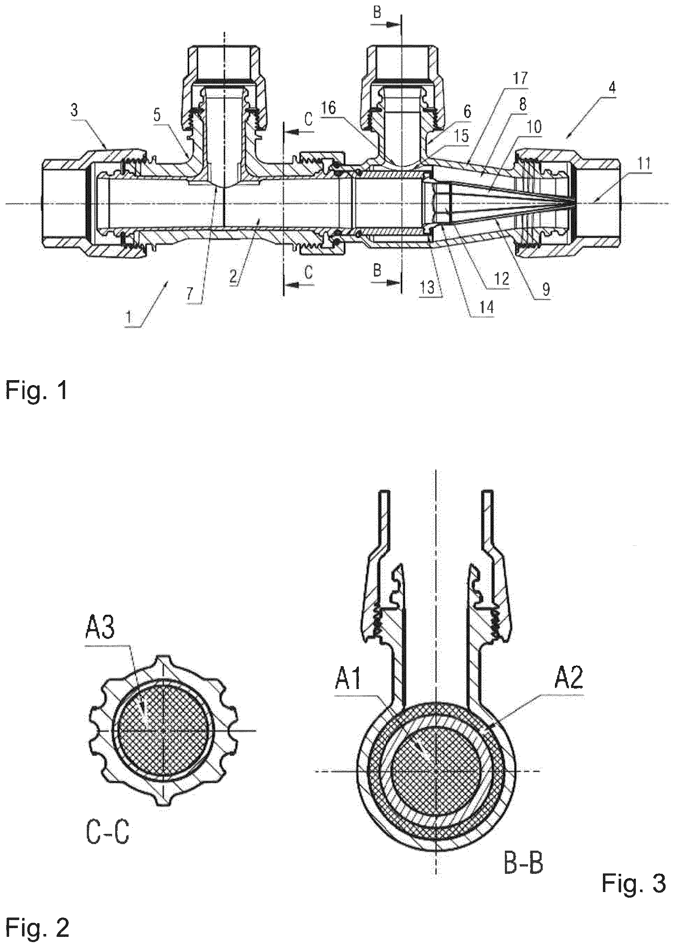

Die Figur 1 zeigt eine schematische Längsschnittdarstellung einer Anschlussarmatur 1 zum Anschließen einer nicht näher dargestellten Ringleitung an eine ebenfalls nicht gezeigte Hauptleitung. Die Anschlussarmatur 1 weist eine Verbindungsleitung 2 auf, über die ein erster Hauptleitungsanschluss 3 und ein zweiter Hauptleitungsanschluss 4 innerhalb der Anschlussarmatur 1 strömungstechnisch aneinander angeschlossen sind. Über die Hauptleitungsanschlüsse 3 und 4 wird die Hauptleitung an die Anschlussarmatur 1 strömungstechnisch angeschlossen. Ein Anschließen der Ringleitung erfolgt über einen ersten Ringleitungsanschluss 5 und einen zweiten Ringleitungsanschluss 6. Der erste Ringleitungsanschluss 5 ist über eine Mündungsöffnung 7 an die Verbindungsleitung 2 angeschlossen beziehungsweise mündet über diese in die Verbindungsleitung 2 ein.

Gezeigt ist eine Ausgestaltung der Anschlussarmatur 1, bei welcher der erste Hauptleitungsanschluss 3 und der erste Ringleitungsanschluss 5 jeweils unmittelbar an die Verbindungsleitung 2 angeschlossen sind. Der zweite Hauptleitungsanschluss 4 und der zweite Ringleitungsanschluss 6 sind jeweils lediglich mittelbar, nämlich über eine Verbindungskammer 8 an die Verbindungsleitung 2 strömungstechnisch angeschlossen. Zudem ist strömungstechnisch zwischen der Verbindungsleitung 2 und der Verbindungskammer 8 ein Querschnittsverstellelement 9 angeordnet. Dieses weist mehrere Zungen 10 auf, die in radialer Richtung bezüglich einer Längsmittelachse 11 des Querschnittsverstellelements 9, welche mit einer Längsmittelachse der Verbindungsleitung 2 zusammenfällt, elastisch verlagerbar sind.

Das Querschnittsverstellelement 9 ist über ein Strömungswiderstandselement 12 strömungstechnisch an die Verbindungsleitung 2 angeschlossen, vorzugsweise zusätzlich über dieses an der Verbindungsleitung 2 befestigt. Beispielsweise weist das Strömungswiderstandselement 12 hierzu ein Halteelement 13 und ein Drosselelement 14 auf. Das Drosselelement 14 ist über das Halteelement 13 an der Verbindungsleitung 2 befestigt. Strömungstechnisch ist das Querschnittsverstellelement 9 über das Drosselelement 14, welches eine konstante Durchströmungsquerschnittsfläche aufweist, an die Verbindungsleitung 2 angeschlossen. Vorzugsweise ist das Halteelement 13 der Strömungswiderstandselements 12 wie hier dargestellt formschlüssig mit der Verbindungsleitung 2 verbunden beziehungsweise an ihr befestigt.

In der hier gezeigten Längsschnittdarstellung ist erkennbar, dass der zweite Ringleitungsanschluss 6 über einen Ringraum 15 strömungstechnisch an die Verbindungskammer 8 angeschlossen ist. Der Ringraum 15 wird zumindest bereichsweise von der Verbindungsleitung 2 begrenzt, insbesondere in radialer Richtung nach innen. Hierbei ist die Verbindungsleitung 2 derart angeordnet und/oder ausgebildet, dass sie eine Mündungsöffnung 16, an welcher der zweite Ringleitungsanschluss 6 in den Ringraum 15 einmündet, vollständig übergreift. Zusätzlich ist es vorgesehen, dass das Querschnittsverstellelement 9 vollständig auf einer dem ersten Ringleitungsanschluss 5 abgewandten Seite der Mündungsöffnung 16 angeordnet ist. Dies führt dazu, dass das Querschnittsverstellelement 9 bezüglich einer Durchströmungsrichtung der Verbindungsleitung 2 stromabwärts, insbesondere vollständig stromabwärts, des zweiten Ringleitungsanschlusses 6 beziehungsweise der Mündungsöffnung 16 angeordnet ist. Besonders bevorzugt ist das Querschnittsverstellelement 9 in Strömungsrichtung beabstandet von dem zweiten Ringleitungsanschluss 6 beziehungsweise der Mündungsöffnung 16 angeordnet, beispielsweise um einen Abstand, der mindestens 2,5 %, mindestens 5 %, mindestens 7,5 % oder mindestens 10 % eines Innendurchmessers der Verbindungsleitung 2 entspricht.

Eine besonders gute Strömungsführung in der Anschlussarmatur 1 wird durch die hier dargestellte konische Ausgestaltung der Verbindungskammer 8 erzielt. Die Verbindungskammer 8 wird außenseitig von einem Armaturengehäuse 17 begrenzt, das auch den Ringraum 15 begrenzt. In der hier dargestellten Ausführungsform wird der Ringraum 15 in radialer Richtung nach innen von der Verbindungsleitung 2 und in radialer Richtung nach außen von dem Armaturengehäuse 17 begrenzt, wobei in dem Armaturengehäuse 17 der zweite Hauptleitungsanschluss 4 sowie die Mündungsöffnung 16 ausgebildet sind.

Die Figur 2 zeigt eine schematische Querschnittsdarstellung der Anschlussarmatur 1 an den in der Figur 1 angedeuteten Schnittmarken C-C. Angedeutet ist eine Durchströmungsquerschnittsfläche A3 der Verbindungsleitung 2.

Die Figur 3 zeigt eine weitere schematische Querschnittsdarstellung der Anschlussarmatur 1, nämlich entsprechend den in der Figur 1 angedeuteten Schnittmarken B-B. In diesem Querschnitt weist die Verbindungsleitung 2 eine Durchströmungsquerschnittsfläche A1 auf, wohingegen der Ringraum 15 eine Durchströmungsquerschnittsfläche A2 aufweist. Vorzugsweise entsprechen sich die Durchströmungsquerschnittsflächen A1 und A2. Besonders bevorzugt gilt A1 = A2 = A3.

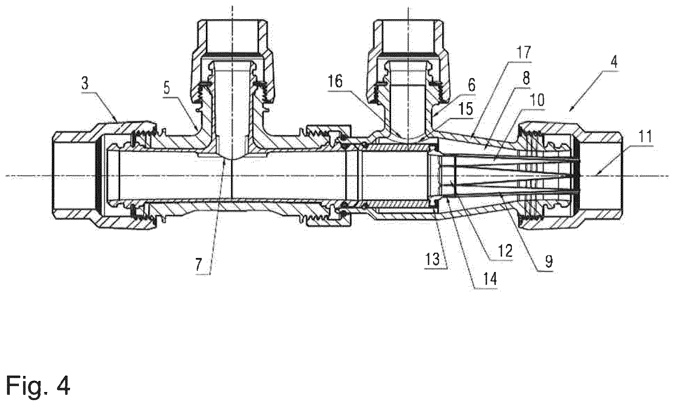

Die Figur 4 zeigt eine weitere schematische Längsschnittdarstellung der Anschlussarmatur 1, wobei mittels des Querschnittsverstellelements 9 eine zweite Durchströmungsquerschnittsfläche eingestellt ist, welche von der ersten Durchströmungsquerschnittsfläche verschieden ist. Hierzu sind die Zungen 10 in radialer Richtung bezüglich der Längsmittelachse 11 nach außen verlagert. Dies erfolgt selbsttätig aufgrund der Durchströmung der Anschlussarmatur 1 ausgehend von dem ersten Hauptleitungsanschluss 4 hin zu dem zweiten Ringleitungsanschluss 6.

## Patentansprüche

1. Anschlussarmatur (1) zum strömungstechnischen Anschließen einer Ringleitung an eine Hauptleitung, mit einem ersten Hauptleitungsanschluss (3) und einem zweiten Hauptleitungsanschluss (4) zum Anschließen der Hauptleitung sowie einem ersten Ringleitungsanschluss (5) und einem zweiten Ringleitungsanschluss (6) zum Anschließen der Ringleitung, wobei der erste Hauptleitungsanschluss (3) und erste Ringleitungsanschluss (5) unmittelbar an eine Verbindungsleitung (2) strömungstechnisch angeschlossen sind, die über ein Querschnittsverstellelement (9) in eine Verbindungskammer (8) einmündet, an die der zweite Hauptleitungsanschluss (4) auf der dem ersten Hauptleitungsanschluss (3) strömungstechnisch abgewandten Seite angeschlossen ist, **dadurch gekennzeichnet, dass** der zweite Ringleitungsanschluss (6) über einen von der Verbindungsleitung (2) begrenzten Ringraum (15) strömungstechnisch an die Verbindungskammer (8) angeschlossen ist, sodass im Schnitt gesehen die Verbindungsleitung (2) eine Mündungsöffnung (16) des zweiten Ringleitungsanschlusses (6) in den Ringraum (15) vollständig übergreift und das Querschnittsverstellelement (9) vollständig auf einer dem ersten Ringleitungsanschluss (5) abgewandten Seite der Mündungsöffnung (16) angeordnet ist.

2. Anschlussarmatur nach Anspruch 1, **dadurch gekennzeichnet, dass** der Ringraum (15) einerseits von der Verbindungsleitung (2) und andererseits von einem Armaturengehäuse (17) begrenzt ist, an dem der zweite Ringleitungsanschluss (6) ausgebildet ist und das die Verbindungskammer (8) einfasst.

3. Anschlussarmatur nach einem der vorhergehenden Ansprüche, **dadurch gekennzeichnet, dass** die Verbindungskammer (8) durch eine konische Ausgestaltung eine in Richtung des zweiten Hauptleitungsanschlusses (4) abnehmende Durchströmungsquerschnittsfläche aufweist.

4. Anschlussarmatur nach einem der vorhergehenden Ansprüche, **dadurch gekennzeichnet, dass** der zweite Ringleitungsanschluss (6) über die Mündungsöffnung (16) in den Ringraum (15) einmündet, wobei der Ringraum (15) zwischen der Mündungsöffnung (16) und der Verbindungskammer (8) im Schnitt gesehen zumindest bereichsweise eine konstante Durchströmungsquerschnittsfläche aufweist.

5. Anschlussarmatur nach Anspruch 4, **dadurch gekennzeichnet, dass** die konstante Durchströmungsquerschnittsfläche des Ringraums (15) im Schnitt gesehen bis zu einem Leitungsende der Verbindungsleitung (2) vorliegt.

6. Anschlussarmatur nach einem der vorhergehenden Ansprüche, **dadurch gekennzeichnet, dass** das Querschnittverstellelement (9) aus Richtung der Verbindungsleitung (2) in die Verbindungskammer (8) hineinragt.

7. Anschlussarmatur nach einem der vorhergehenden Ansprüche, **dadurch gekennzeichnet, dass** das Querschnittsverstellelement (9) über ein Strömungswiderstandselement (12) an die Verbindungsleitung (2) strömungstechnisch angeschlossen ist.

8. Anschlussarmatur nach Anspruch 7, **dadurch gekennzeichnet, dass** das Strömungswiderstandselement (12) ein an dem Leitungsende der Verbindungsleitung (2) befestigtes Halteelement (13) und ein Drosselelement (14) mit konstanter Durchströmungsquerschnittsfläche aufweist, wobei das Drosselelement (14) über das Halteelement (13) an der Verbindungsleitung (2) befestigt ist.

9. Anschlussarmatur nach einem der vorhergehenden Ansprüche, **dadurch gekennzeichnet, dass** das Querschnittsverstellelement (9) mehrere Zungen (10) aufweist, die in Umfangsrichtung einer Längsmittelachse (11) des Querschnittsverstellelements (9) verteilt angeordnet sind und in radialer Richtung zum Einstellen der Durchströmungsquerschnittsfläche des Querschnittsverstellelements (9) elastisch verlagerbar sind.

10. Anschlussarmatur nach einem der vorhergehenden Ansprüche, **dadurch gekennzeichnet, dass** der Ringraum (15) in einem Querschnitt eine Durchströmungsquerschnittsfläche aufweist, die mindestens so groß ist wie die Durchströmungsquerschnittsfläche der Verbindungsleitung (2) in demselben Querschnitt.

11. Anschlussarmatur nach einem der vorhergehenden Ansprüche, **dadurch gekennzeichnet, dass** die Verbindungsleitung (2) an einer Einmündungsstelle (7) des ersten Ringleitungsanschlusses (5) eine Durchströmungsquerschnittsfläche aufweist, die kleiner ist als die Durchströmungsquerschnittsfläche der Verbindungsleitung (2) in dem Querschnitt an sich, oder dass die Verbindungsleitung (2) eine durchgehend konstante Durchströmungsquerschnittsfläche aufweist.

12. Wasserleitungssystem für ein Gebäude, mit einer Hauptleitung, einer Ringleitung sowie einer Anschlussarmatur (1), insbesondere einer Anschlussarmatur (1) einem oder mehreren der vorhergehenden Ansprüche, wobei die Ringleitung über die Anschlussarmatur (1) strömungstechnisch an die Hauptleitung angeschlossen ist und die Anschlussarmatur (1) über einen ersten Hauptleitungsanschluss (3) und einen zweiten Hauptleitungsanschluss (4), die an die Hauptleitung angeschlossen sind, sowie einen ersten Ringleitungsanschluss (5) und einen zweiten Ringleitungsanschluss (6), die an die Ringleitung angeschlossen sind, verfügt, wobei der erste Hauptleitungsanschluss (3) und der erste Ringleitungsanschluss (5) unmittelbar an eine Verbindungsleitung (2) strömungstechnisch angeschlossen sind, die über ein Querschnittsverstellelement (9) in eine Verbindungskammer (8) einmündet, an die der zweite Hauptleitungsanschluss (4) auf der dem ersten Hauptleitungsanschluss (3) strömungstechnisch abgewandten Seite angeschlossen ist, **dadurch gekennzeichnet, dass** der zweite Ringleitungsanschluss (6) über einen von der Verbindungsleitung (2) begrenzten Ringraum (15) strömungstechnisch an die Verbindungskammer (8) angeschlossen ist, sodass im Schnitt gesehen die Verbindungsleitung (2) eine Mündungsöffnung (16) des zweiten Ringleitungsanschlusses (6) in den Ringraum (15) vollständig übergreift und das Querschnittsverstellelement (9) vollständig auf einer dem ersten Ringleitungsanschluss (5) abgewandten Seite der Mündungsöffnung (16) angeordnet ist.

## Claims

1. Connection fitting (1) for connection in terms of flow of a ring line to a main line, having a first main line connection (3) and a second main line connection (4) for connection of the main line, and having a first ring line connection (5) and a second ring line connection (6) for connection of the ring line, wherein the first main line connection (3) and the first ring line connection (5) are connected in terms of flow directly to a connecting line (2) which, via a cross section-adjusting element (9), opens into a connecting chamber (8) to which the second main line connection (4) is connected on the side facing away in terms of flow from the first main line connection (3), **characterized in that** the second ring line connection (6) is, via an annular space (15) delimited by the connecting line (2), connected in terms of flow to the connecting chamber (8) such that, as viewed in section, the connecting line (2) engages completely over a mouth opening (16) of the second ring line connection (6) into the annular space (15), and the cross section-adjusting element (9) is arranged completely on a side of the mouth opening (16) that is facing away from the first ring line connection (5).

2. Connection fitting according to Claim 1, **characterized in that** the annular space (15) is delimited at one side by the connecting line (2) and at the other side by a fitting housing (17) on which the second ring line connection (6) is formed and which encloses the connecting chamber (8).

3. Connection fitting according to either of the preceding claims, **characterized in that** the connecting chamber (8) has, by way of a conical configuration, a throughflow cross-sectional area which decreases in the direction of the second main line connection (4).

4. Connection fitting according to one of the preceding claims, **characterized in that** the second ring line connection (6) opens into the annular space (15) via the mouth opening (16), wherein, between the mouth opening (16) and the connecting chamber (8), the annular space (15), as viewed in section, has, at least regionally, a constant throughflow cross-sectional area.

5. Connection fitting according to Claim 4, **characterized in that** the constant throughflow cross-sectional area of the annular space (15), as viewed in section, is realized as far as a line end of the connecting line (2).

6. Connection fitting according to one of the preceding claims, **characterized in that** the cross section-adjusting element (9) projects into the connecting chamber (8) from the direction of the connecting line (2).

7. Connection fitting according to one of the preceding claims, **characterized in that** the cross section-adjusting element (9) is connected in terms of flow to the connecting line (2) via a flow resistance element (12).

8. Connection fitting according to Claim 7, **characterized in that** the flow resistance element (12) has a holding element (13), which is fastened to the line end of the connecting line (2), and a throttle element (14) with a constant throughflow cross-sectional area, wherein the throttle element (14) is fastened to the connecting line (2) via the holding element (13).

9. Connection fitting according to one of the preceding claims, **characterized in that** the cross section-adjusting element (9) has multiple tongues (10) which are arranged distributed in a circumferential direction of a longitudinal central axis (11) of the cross section-adjusting element (9) and which, for setting the throughflow cross-sectional area of the cross section-adjusting element (9), are elastically displaceable in a radial direction.

10. Connection fitting according to one of the preceding claims, **characterized in that** the annular space (15) has, in a cross section, a throughflow cross-sectional area which is at least as large as the throughflow cross-sectional area of the connecting line (2) in the same cross section.

11. Connection fitting according to one of the preceding claims, **characterized in that** the connecting line (2) has, at an opening-in point (7) of the first ring line connection (5), a throughflow cross-sectional area which is less than the throughflow cross-sectional area of the connecting line (2) in cross section itself, or **in that** the connecting line (2) has a throughflow cross-sectional area which is constant throughout.

12. Water line system for a building, having a main line, having a ring line and having a connection fitting (1), in particular a connection fitting (1) according to one or more of the preceding claims, wherein the ring line is connected in terms of flow to the main line via the connection fitting (1), and the connection fitting (1) has a first main line connection (3) and a second main line connection (4), which are connected to the main line, and has a first ring line connection (5) and a second ring line connection (6), which are connected to the ring line, wherein the first main line connection (3) and the first ring line connection (5) are connected in terms of flow directly to a connecting line (2) which, via a cross section-adjusting element (9), opens into a connecting chamber (8) to which the second main line connection (4) is connected on the side facing away in terms of flow from the first main line connection (3), **characterized in that** the second ring line connection (6) is, via an annular space (15) delimited by the connecting line (2), connected in terms of flow to the connecting chamber (8) such that, as viewed in section, the connecting line (2) engages completely over a mouth opening (16) of the second ring line connection (6) into the annular space (15), and the cross section-adjusting element (9) is arranged completely on a side of the mouth opening (16) that is facing away from the first ring line connection (5).

## Revendications

1. Armature de raccordement (1) servant au raccordement fluidique d'une conduite annulaire à une conduite principale, comportant un premier raccord de conduite principale (3) et un deuxième raccord de conduite principale (4) pour le raccordement de la conduite principale ainsi qu'un premier raccord de conduite annulaire (5) et un deuxième raccord de conduite annulaire (6) pour le raccordement de la conduite annulaire, dans laquelle le premier raccord de conduite principale (3) et le premier raccord de conduite annulaire (5) sont raccordés fluidiquement directement à une conduite de liaison (2) qui débouche dans une chambre de liaison (8) par le biais d'un élément de réglage de section transversale (9), chambre à laquelle est raccordé le deuxième raccord de conduite principale (4) sur le côté opposé fluidiquement au premier raccord de conduite principale (3), **caractérisée en ce que** le deuxième raccord de conduite annulaire (6) est raccordé fluidiquement à la chambre de liaison (8) par le biais d'un espace annulaire (15) limité par la conduite de liaison (2), de telle sorte que, vue en coupe, la conduite de liaison (2) recouvre complètement une ouverture de débouché (16) du deuxième raccord de conduite annulaire (6) dans l'espace annulaire (15) et l'élément de réglage de section transversale (9) est disposé complètement sur un côté de l'ouverture de débouché (16) opposé au premier raccord de conduite annulaire (5).

2. Armature de raccordement selon la revendication 1, **caractérisée en ce que** l'espace annulaire (15) est limité d'une part par la conduite de liaison (2) et d'autre part par un boîtier d'armature (17) sur lequel le deuxième raccord de conduite annulaire (6) est formé et qui entoure la chambre de liaison (8).

3. Armature de raccordement selon l'une des revendications précédentes, **caractérisée en ce que** la chambre de liaison (8) présente, grâce à une configuration conique, une aire en section transversale d'écoulement diminuant en direction du deuxième raccord de conduite principale (4).

4. Armature de raccordement selon l'une des revendications précédentes, **caractérisée en ce que** le deuxième raccord de conduite annulaire (6) débouche dans l'espace annulaire (15) par le biais de l'ouverture de débouché (16), l'espace annulaire (15) entre l'ouverture de débouché (16) et la chambre de liaison (8) présentant, vu en coupe, une aire en section transversale d'écoulement constante au moins dans certaines zones.

5. Armature de raccordement selon la revendication 4, **caractérisée en ce que** l'aire en section transversale d'écoulement constante de l'espace annulaire (15), vue en coupe, est présente jusqu'à une extrémité de la conduite de liaison (2).

6. Armature de raccordement selon l'une des revendications précédentes, **caractérisée en ce que** l'élément de réglage de section transversale (9) pénètre dans la chambre de liaison (8) à partir de la direction de la conduite de liaison (2).

7. Armature de raccordement selon l'une des revendications précédentes, **caractérisée en ce que** l'élément de réglage de section transversale (9) est raccordé fluidiquement à la conduite de liaison (2) par le biais d'un élément de résistance à l'écoulement (12).

8. Armature de raccordement selon la revendication 7, **caractérisée en ce que** l'élément de résistance à l'écoulement (12) comprend un élément de retenue (13) fixé à l'extrémité de la conduite de liaison (2) et un élément d'étranglement (14) d'aire en section transversale d'écoulement constante, l'élément d'étranglement (14) étant fixé à la conduite de liaison (2) par le biais de l'élément de retenue (13).

9. Armature de raccordement selon l'une des revendications précédentes, **caractérisée en ce que** l'élément de réglage de section transversale (9) comprend plusieurs languettes (10) qui sont disposées de manière répartie dans la direction périphérique d'un axe médian longitudinal (11) de l'élément de réglage de section transversale (9) et sont déplaçables élastiquement dans la direction radiale pour le réglage de l'aire en section transversale d'écoulement de l'élément de réglage de section transversale (9).

10. Armature de raccordement selon l'une des revendications précédentes, **caractérisée en ce que** l'espace annulaire (15) présente, dans une section transversale, une aire en section transversale d'écoulement qui est au moins égale à l'aire en section transversale d'écoulement de la conduite de liaison (2) dans la même section transversale.

11. Armature de raccordement selon l'une des revendications précédentes, **caractérisée en ce que** la conduite de liaison (2) présente, à un point d'embouchure (7) du premier raccord de conduite annulaire (5), une aire en section transversale d'écoulement qui est inférieure à l'aire en section transversale d'écoulement de la conduite de liaison (2) dans la section transversale elle-même, ou **en ce que** la conduite de liaison (2) présente une aire en section transversale d'écoulement constante de bout en bout.

12. Système de conduites d'eau pour un bâtiment, comportant une conduite principale, une conduite annulaire ainsi qu'une armature de raccordement (1), en particulier une armature de raccordement (1) selon l'une ou plusieurs des revendications précédentes, dans lequel la conduite annulaire est raccordée fluidiquement à la conduite principale par le biais de l'armature de raccordement (1) et l'armature de raccordement (1) comporte un premier raccord de conduite principale (3) et un deuxième raccord de conduite principale (4), qui sont raccordés à la conduite principale, ainsi qu'un premier raccord de conduite annulaire (5) et un deuxième raccord de conduite annulaire (6), qui sont raccordés à la conduite annulaire, dans lequel le premier raccord de conduite principale (3) et le premier raccord de conduite annulaire (5) sont raccordés fluidiquement directement à une conduite de liaison (2) qui débouche dans une chambre de liaison (8) par le biais d'un élément de réglage de section transversale (9), chambre à laquelle est raccordé le deuxième raccord de conduite principale (4) sur le côté opposé fluidiquement au premier raccord de conduite principale (3), **caractérisé en ce que** le deuxième raccord de conduite annulaire (6) est raccordé fluidiquement à la chambre de liaison (8) par le biais d'un espace annulaire (15) limité par la conduite de liaison (2), de telle sorte que, vue en coupe, la conduite de liaison (2) recouvre complètement une ouverture de débouché (16) du deuxième raccord de conduite annulaire (6) dans l'espace annulaire (15) et l'élément de réglage de section transversale (9) est disposé complètement sur un côté de l'ouverture de débouché (16) opposé au premier raccord de conduite annulaire (5).
